# EUROPEAN PATENT APPLICATION

(11) **EP 4 087 038 A1**
(43) Date of publication of application: **09.11.2022**
(21) Application number: 21796664.7
(22) Date of filing: 12.03.2021
(51) Int. Cl.: H01M 50/20, H01M 50/24, H01M 50/502, H01M 50/116

(54) **BATTERY MODULE AND BATTERY PACK INCLUDING SAME**

(30) Priority: 29.04.2020 KR 20200052303
(71) Applicant: LG Energy Solution, Ltd., Seoul 07335 (KR)
(72) Inventor: JANG, Sunghwan, Daejeon 34122 (KR); SEONG, Junyeob, Daejeon 34122 (KR); BANG, Seok Jun, Daejeon 34122 (KR)
(74) Representative: Hoffmann Eitle
(86) International application number: PCT/KR2021/003078
(87) International publication number: WO 2021/221309

(57) **Abstract**

A battery module according to an exemplary embodiment of the present invention includes: a plurality of cell blocks including a battery cell stack including one or more battery cells each of which includes an electrode lead, and a bus bar cover electrically connected with the electrode leads at an end in a longitudinal direction of the battery cell stack from which the electrode leads protrude and covering the end in the longitudinal direction of the battery cell stack; and an internal bus bar member configured to electrically connect the plurality of cell blocks.

## Description

### [Technical Field]

### CROSS-REFERENCE TO RELATED APPLICATION

This application claims priority to and the benefit of Korean Patent Application No. 10-2020-0052303 filed in the Korean Intellectual Property Office on April 29, 2020, the entire contents of which are incorporated herein by reference.

The present invention relates to a battery module and a battery pack including the same, and more particularly, to a battery module with improved assembly efficiency and a battery pack including the same.

### [Background Art]

A secondary battery, which is highly easily applied according to product groups and has electrical characteristic, such as high energy density, is universally applied to electric vehicles or hybrid vehicles driven by an electric drive source, power storage devices, and the like, as well as portable devices. The secondary battery is attracting attention as a new energy source for enhancing eco-friendliness and energy efficiency in that the secondary battery does not generate any by-products from the use of energy, as well as the primary advantage of dramatically reducing the use of fossil fuels.

While one or two or more battery cells are used per device in small mobile devices, medium and large devices, such as vehicles, require high output and high capacity battery cells. Therefore, a medium and large battery module in which a plurality of battery cells is electrically connected is used.

Since it is desirable that the middle and large battery module is manufactured as small as possible in size and weight, a prismatic battery, a pouch-type battery, and the like that can be stacked with a high degree of integration and have small weight compared to capacity are mainly used as battery cells of the middle and large battery module. In order to output high output, the battery module has a structure in which a plurality of cell assemblies including a plurality of unit battery cells is serially connected. Further, the battery cell includes positive electrode and negative electrode current collectors, a separator, an active material, an electrolyte, and the like, so that the battery cell is capable of being repeatedly charged and discharged by an electrochemical reaction between the constituent elements.

In the meantime, in recent years, as the need for a large-capacity structure including use as an energy storage source increases, the demand for a battery pack having a multi-module structure in which a plurality of battery modules in which a plurality of secondary batteries is connected in series and/or in parallel is aggregated is increasing.

In the meantime, in the case where the battery pack is configured by connecting the plurality of battery cells in series/in parallel, the battery module formed of at least one battery cell is first configured, and the battery pack is configured by adding other constituent elements by using at least one battery module, which is a general method. The number of battery modules included in the battery pack or the number of battery cells included in the battery module may be variously set according to an output voltage or charge/discharge capacity demanded.

However, when the configuration of the battery module configuring the battery pack is complex and the number of components is increased, there is a problem in that the configuration of the battery pack also becomes complex and the battery pack has increasing weight. Particularly, as the demand for a large-capacity/large-area structure increases, the number of battery modules included in the battery pack also increases, and there is a growing need to simplify the structure of the battery module to improve assembly efficiency and reduce weight.

### [Disclosure]

### [Technical Problem]

The present invention has been made in an effort to provide a battery module having a simpler structure and improved assembly efficiency, and a battery pack including the same.

However, the problem to be solved in the exemplary embodiments of the present invention is not limited to the foregoing problem, and may be variously extended in the scope of the technical spirit included in the present invention.

### [Technical Solution]

A battery module according to an exemplary embodiment of the present invention includes: a plurality of cell blocks including a battery cell stack including one or more battery cells each of which includes an electrode lead, and a bus bar cover electrically connected with the electrode leads at an end in a longitudinal direction of the battery cell stack from which the electrode leads protrude and covering the end in the longitudinal direction of the battery cell stack; and an internal bus bar member configured to electrically connect the plurality of cell blocks.

An additional insulating frame may not be disposed between the bus bar cover and the battery cell stack.

Each of the cell blocks may further include an insulating cover surrounding an external surface of the battery cell stack that is not covered by the bus bar cover.

The internal bus bar member may include a rod member including holes at both ends and a bolt member coupled to the hole.

The rod member may be extended between the bus bar covers of the adjacent cell blocks among the plurality of cell blocks, and the bus bar cover may include a fastening hole for coupling with the bolt member.

The electrode lead and the bus bar cover may be coupled by welding.

The bus bar cover may be made of a conductive material.

The battery module may further include an expansion control pad disposed between the insulating cover and the battery cell stack.

A battery pack according to another exemplary embodiment of the present invention may include: said at least one battery module; and a pack case configured to pack said at least one battery module.

A device according to another exemplary embodiment of the present invention may include said at least one battery pack.

### [Advantageous Effects]

According to the exemplary embodiments of the present invention, it is possible to protect the end of the battery cell stack and achieve the electric connection through the bus bar cover at the same time without providing a bus bar frame, thereby forming a battery module with a simpler structure. Accordingly, it is possible to obtain the effect of cost reduction and weight reduction due to a reduction in the number of components.

In addition, a pouch cell including a flexible pouch case is provided with the bus bar cover and the insulating cover, thereby supplementing dimensional instability of the pouch cell.

### [Description of the Drawings]

FIG. 1 is a perspective view of a battery module according to an exemplary embodiment of the present invention.
FIG. 2 is a perspective view for one cell block of FIG. 1.
FIG. 3 is a perspective view illustrating one battery cell included in the cell block of FIG. 2.
FIG. 4 is an enlarged view of a bus bar cover portion in the cell block of FIG. 2.
FIG. 5 is a front view illustrating a bus bar cover included in FIG. 1.
FIG. 6 is a front view illustrating a bus bar frame included in a battery module according to a comparative example.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention.

Accordingly, the drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present invention is not limited thereto. In the drawings, the thickness of layers, films, panels, regions, etc., are exaggerated for clarity. In the drawings, for understanding and ease of description, the thickness of some layers and areas is exaggerated.

Further, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, when an element is "on" a reference portion, the element is located above or below the reference portion, and it does not necessarily mean that the element is located "on" in a direction opposite to gravity.

In addition, unless explicitly described to the contrary, the word "comprise", and variations such as "comprises" or "comprising", will be understood to imply the inclusion of stated elements but not the exclusion of any other elements.

Further, in the entire specification, when it is referred to as "on a plane", it means when a target part is viewed from above, and when it is referred to as "on a cross-section", it means when the cross-section obtained by cutting a target part vertically is viewed from the side.

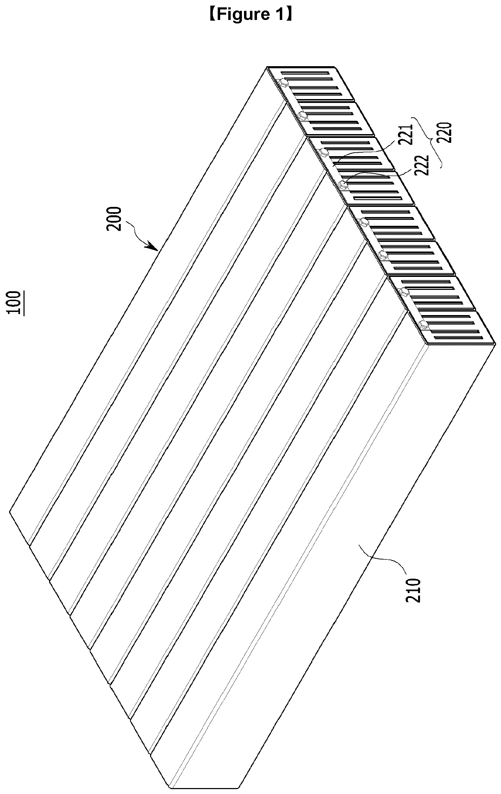

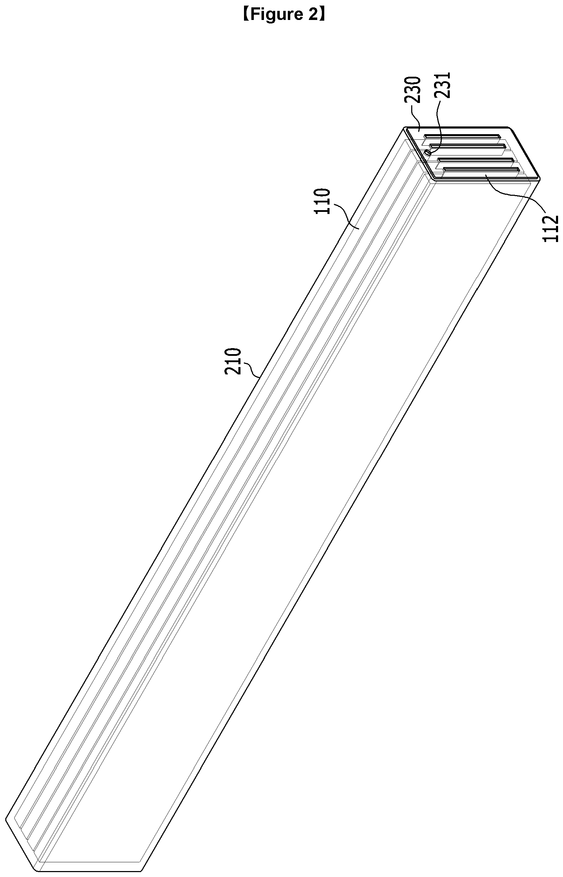

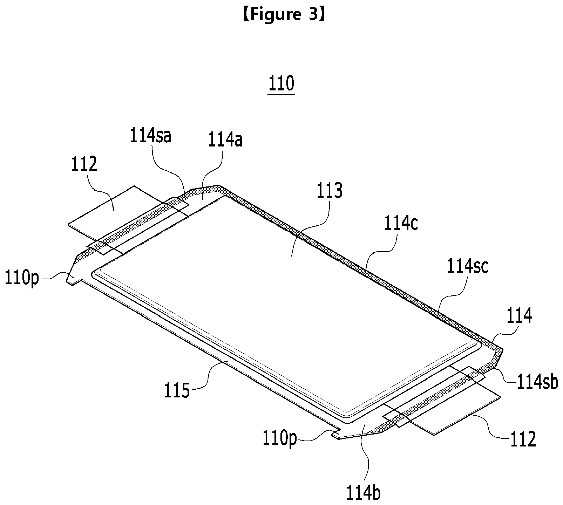

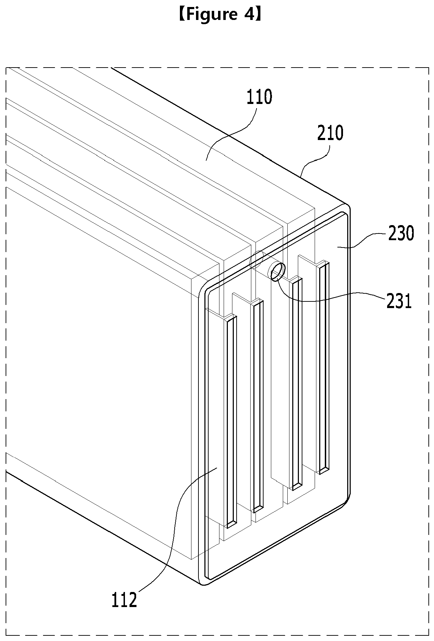

FIG. 1 is a perspective view of a battery module according to an exemplary embodiment of the present invention, FIG. 2 is a perspective view for one cell block of FIG. 1, FIG. 3 is a perspective view illustrating one battery cell included in the cell block of FIG. 2, and FIG. 4 is an enlarged view of a bus bar cover portion in the cell block of FIG. 2.

Referring to FIGS. 1 to 4, a battery module 100 according to an exemplary embodiment of the present invention includes a plurality of cell blocks 200 including a battery cell stack in which a plurality of battery cells 110 including electrode leads 112, respectively, is stacked, and a bus bar cover 230 electrically connected with the electrode leads 112 in an end portion in a longitudinal direction of the battery cell stack on which the electrode leads 112 protrude and covering the end portion in the longitudinal direction of the battery cell stack, and includes an internal bus bar member 220 which electrically connects the plurality of cell blocks 200 to each other.

First, the battery cell 110 may be a pouch-type battery cell. In relation to this, referring to FIG. 3, the battery cell 110 according to the present exemplary embodiment has a structure in which two electrode leads 112 protrude from one end 114a and the other end 114b of a cell main body 113, respectively, while facing each other. The battery cell 110 may be manufactured by bonding both ends 114a and 114b of a cell case 114 to both side surfaces 114c connecting both ends 114a and 114b in the state where the electrode assembly (not illustrated) is accommodated in the cell case 114. That is, the battery cell 110 according to the present exemplary embodiment has three sealing portions 114sa, 114sb, and 114sc, and the sealing portions 114sa, 114sb, and 114sc have the structures sealed by thermal fusion and the like, and the other side portion may be formed as a connection portion 115. A space between both ends 114a and 114b of the cell case 114 may be defined as a longitudinal direction of the battery cell 110, and a space between the one side surface 114c connecting both ends 114a and 114b of the cell case 114 and the connection portion 115 may be defined as a width direction of the battery cell 110.

The connection portion 115 is the region elongated along one border of the battery cell 110, and a protruding portion 110p of the battery cell 110 may be formed on an end of the connection portion 115. The protruding portion 110p may be formed on at least one of both ends of the connection portion 115, and may protrude in a direction vertical to a direction in which the connection portion 115 extends. The protruding portion 110p may be positioned between one of the sealing portions 114sa and 114sb of both ends 114a and 114b of the cell case 114 and the connection portion 115.

The cell case 114 is generally formed in a laminated structure of a resin layer/metal thin film layer/resin layer. For example, in the case where a surface of the cell case is formed in an O(oriented)-nylon layer, when a plurality of battery cells is stacked to form a middle or large battery module, the plurality of battery cells tends to slide easily due to external impact. Accordingly, in order to prevent the sliding of the battery cells and maintain a stable stack structure of the battery cells, the battery cell stack may be formed by attaching an adhesive member, such as an adhesive including a double-sided tape, or a chemical adhesive bonded by a chemical reaction during adhesion to the surface of the cell case.

Since the battery cell stack is in the state formed by simply stacking the pouch-type battery cells 110, external dimensional stability may be somewhat low. That is, the outside of each of the battery cells 110 is defined by the cell case 114, and as described above, since the cell case 114 is formed of a sheet having the laminate structure and an electrolyte and the like is filled inside the cell case 114, the cell case 114 is in a state in which the shape may be deformed or flow may occur due to external force.

In the exemplary embodiment of the present invention, the end of the battery cell stack from which the electrode leads 112 of the battery cell 110 protrude is covered by a bus bar cover 230, and the remaining four side surfaces of the battery cell stack which are not covered by the bus bar cover 230 have a structure surrounded by an insulating cover 210. As described above, the bus bar covers 230 covering both ends of the battery cell stack and the insulating cover 210 covering the side surfaces of the battery cell stack configure one cell block 200.

The bus bar cover 230 is a plate-shaped member made of a conductive material, and is electrically connected to the electrode lead 112 and simultaneously serves as a cover protecting the end of the battery cell stack. In this case, the electrode lead 112 may be coupled to the bus bar cover 230 by welding and the like. Although not illustrated in particular, a slit, to which the electrode lead 112 is inserted, may be included in the bus bar cover 230, but the present invention is not limited thereto. That is, the electrode lead 112 may be inserted into the slit and coupled to an external side of the bus bar cover 230 by welding, and may also be coupled within the slit by welding.

As described above, in the exemplary embodiment of the present invention, since the bus bar cover 230 is electrically connected with the electrode lead 112 to serve as the bus bar, and also serves as the cover protecting the end of the battery cell stack, a configuration, such as a bus bar frame, which is additionally provided for fixing the bus bar in the existing configuration is not required. Accordingly, it is possible to decrease the number of components, thereby achieving decrease in costs and weight of the entire module.

Further, since the battery cell 110 having somewhat low dimensional stability is formed so that the external surface of the battery cell 110 is surrounded by the bus bar cover 230 and the insulating cover 210, it is possible to manufacture the cell block 200 having the standardized constant size. Accordingly, it is possible to reduce process loss and the like due to size instability.

The insulating cover 210 may be the cover made of an insulating material, for example, an injection molding product, and is not particularly limited. Further, for dimensional stability, the insulating cover 210 is preferably a rigid injection molding product. Further, since the insulating cover 210 has an insulating property, the insulating cover 210 may be in direct contact with the side surface of the battery cell stack. Otherwise, an expansion control pad which is capable of absorbing volume expansion of the battery cell 110 may be further included between the insulating cover 210 and the side surface of the battery cell stack, and the present invention is not particularly limited thereto. The expansion control pad may include a material including a soft elastic material, such as polyurethane (PU) or ethylene propylenediene monomer (EDPM). Since the foregoing material has excellent absorbency against vibration and excellent repulsion against compression, even though a cell swelling phenomenon occurs in the plurality of battery cells 110, it is possible to guide to provide the battery module 100 having excellent dimensional stability.

Each of the cell blocks 200 may be electrically connected with the adjacent cell block 200 through the internal bus bar member 220. Herein, the internal bus bar member 220 may include a rod member 221 having holes at both ends, and a bolt member 222 coupled to the hole of the rod member 221. Further, as illustrated in FIG. 4, the bus bar cover 230 is formed with a fastening hole 231 into which the bolt member 222 of the internal bus bar member 220 is insertable. That is, the rod member 221 is disposed over two bus bar covers 230, which are included in the adjacent cell blocks 200, respectively, and after the hole positioned at the end of the rod member 221 and the fastening hole 231 of the bus bar cover 230 are aligned, the bolt member 222 is inserted so as to pass through the hole of the rod member 221 and the fastening hole 231, thereby achieving the coupling and the electric coupling between the cell blocks 200. However, the electric connection is one example, and other means for the electric connection between the cell blocks 200 may be employed.

By the foregoing simple structure, the coupling and the electric connection between the cell blocks 200 may be achieved, thereby improving assembly efficiency and simplifying the process. Particularly, it is possible to simplify the process and reduce the number of required components compared to the structure in the related art in which the bus bar frame is provided and the bus bar is coupled, thereby completing the battery module 100 having various sizes as necessary.

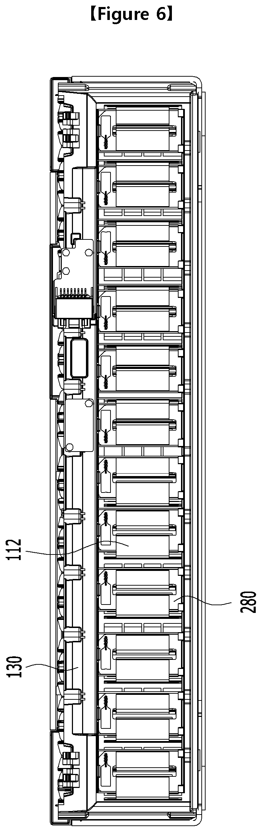

FIG. 6 is a front view illustrating a bus bar frame included in a battery module according to a comparative example. Referring to FIG. 6, the battery module adopts the structure in which a bus bar 280 is mounted to the bus bar frame 130 and the electrode lead 112 is coupled to the bus bar 280. According to the structure, an additional component of the bus bar frame 130 is required, and further, a structure for coupling the bus bar 280 and the bus bar frame 130 is additionally required. In addition, since the size of the bus bar frame 130 formed to correspond to the size of one battery cell stack is fixed, when the battery cell is desired to be additionally provided, there is a problem in that a bus bar frame of a different design needs to be prepared again. Further, in the case of the bus bar 280 is mounted by the bus bar frame 130, a size of the battery module 100 increases as large as the size of the bus bar frame 130 and weight of the module inevitably increases, so that when the battery pack is configured, the space utilization efficiency is also reduced, and the energy density is inevitably lowered.

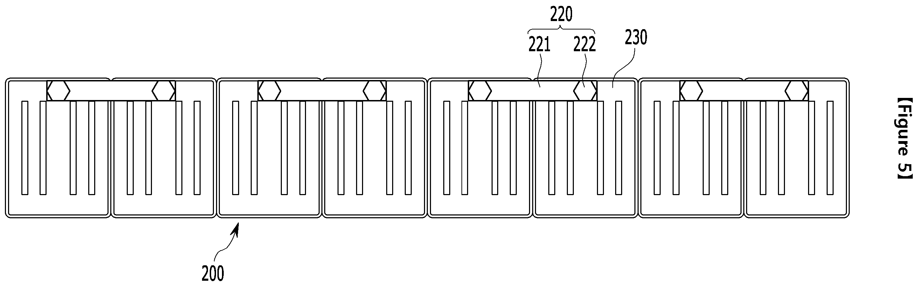

In the meantime, according to the exemplary embodiment of the present invention, since it is possible to connect the unit cell blocks 200 as much as necessary by using only the internal bus bar member 200 as illustrated in FIG. 5, it is possible to variously change the design even without complex modification.

In the meantime, one or more battery modules according to the exemplary embodiment of the present invention may be packed in a pack case to form a battery pack. One or more battery modules may be mounted together with various control and protection systems, such as a Battery Management System (BMS) and a cooling system, to form a battery pack.

Particularly, in the exemplary embodiment of the present invention, it is possible to directly configure the battery pack even without a separate module case, by using the battery module 100 formed by connecting the cell blocks 200, thereby simplifying a structure of the battery pack and improving space utilization within the battery pack. Further, the bus bar frame is not present within the battery module 100, the size and weight of the battery module 100 are decreased, so that it is possible to improve energy density when the battery pack is configured.

The battery module and the battery pack including the same described above may be applied to various devices. The devices may include transport means, such as an electric bicycle, an electric vehicle, and a hybrid vehicle, but the present invention is not limited thereto, and the present invention is applicable to various devices capable of using a battery module and a battery pack including the same, which also belongs to the scope of the present invention.

Although an exemplary embodiment of the present invention has been described in detail, the scope of the present invention is not limited by the embodiment. Various changes and modifications using the basic concept of the present invention defined in the accompanying claims by those skilled in the art shall be construed to belong to the scope of the present invention.

### <Description of Reference Numeral>

110: Battery cell
200: Cell block
210: Insulating cover
220: Internal bus bar member
230: Bus bar cover

### CROSS-REFERENCE TO RELATED APPLICATION

This application claims priority to and the benefit of Korean Patent Application No. 10-2020-0052303 filed in the Korean Intellectual Property Office on April 29, 2020, the entire contents of which are incorporated herein by reference.

## Claims

1. A battery module, comprising:
a plurality of cell blocks including a battery cell stack including one or more battery cells each of which includes an electrode lead, and a bus bar cover electrically connected with the electrode leads at an end in a longitudinal direction of the battery cell stack from which the electrode leads protrude and covering the end in the longitudinal direction of the battery cell stack; and
an internal bus bar member configured to electrically connect the plurality of cell blocks.

2. The battery module of claim 1, wherein:
an additional insulating frame is not disposed between the bus bar cover and the battery cell stack.

3. The battery module of claim 1, wherein:
each of the cell blocks further includes an insulating cover surrounding an external surface of the battery cell stack that is not covered by the bus bar cover.

4. The battery module of claim 1, wherein:
the internal bus bar member includes a rod member including holes at both ends and a bolt member coupled to the hole.

5. The battery module of claim 4, wherein:
the rod member is extended between the bus bar covers of the adjacent cell blocks among the plurality of cell blocks, and
the bus bar cover includes a fastening hole for coupling with the bolt member.

6. The battery module of claim 1, wherein:
the electrode lead and the bus bar cover are coupled by welding.

7. The battery module of claim 1, wherein:
the bus bar cover is made of a conductive material.

8. The battery module of claim 3, further comprising:
an expansion control pad disposed between the insulating cover and the battery cell stack.

9. A battery pack, comprising:
at least one battery module of any one of claims 1 to 8; and
a pack case configured to pack said at least one battery module.

10. A device comprising at least one battery pack of claim 9.
